# EUROPEAN PATENT APPLICATION

(11) **EP 3 961 515 A2**
(43) Date of publication of application: **02.03.2022**
(21) Application number: 21193838.6
(22) Date of filing: 30.08.2021
(51) Int. Cl.: G06N 3/04, G06N 3/08

(54) **METHOD FOR LEARNING MODEL**

(30) Priority: 31.08.2020 KR 20200109820; 19.07.2021 KR 20210093874; 28.07.2021 KR 20210099111
(71) Applicant: SI Analytics Co., Ltd, Daejeon 34047 (KR)
(72) Inventor: LEE, Hakjin, Daejeon 34052 (KR); KOO, Jamyoung, Sejong-si 30064 (KR)
(74) Representative: Maiwald Patent- und Rechtsanwaltsgesellschaft mbH

(57) **Abstract**

According to an exemplary embodiment of the present disclosure, disclosed is a method for learning a model. The method for learning a model may include: computing an input image using a neural network model; computing an accuracy of a prediction box by comparing the prediction box output from the neural network model and a ground truth box; and training the neural network model by performing backpropagation on the neural network model based on the accuracy.

## Description

### CROSS-REFERENCE TO RELATED APPLICATIONS

This application claims priority to and the benefit of Korean Patent Application No. 10-2020-0109820 filed in the Korean Intellectual Property Office on August 31, 2020, the entire contents of which are incorporated herein by reference.

### TECHNICAL FIELD

The present disclosure relates to a method for learning a model, and more particularly, to a method for learning a model based on a prediction box and a ground truth box.

### BACKGROUND ART

In recent years, artificial intelligence systems have been used in various fields. The artificial intelligence system is a system in which a machine autonomously performs learning and judging, and becomes smart unlike a conventional rule based smart system. As the artificial intelligence system is used, a recognition rate is enhanced and a user taste can be more accurately understood, and the conventional rule based smart system is gradually being replaced by a deep running based artificial intelligence system.

Artificial intelligence technology consists of machine learning (e.g., deep learning) and element technologies utilizing the machine learning.

The machine learning is an algorithm technology that autonomously classifies/learns characteristics of input data, and the element technology as a technology that utilizes a machine learning algorithm such as the deep running to simulate a function such as recognition, judgment, etc., of a human brain is constituted by technical fields such as linguistic understanding, visual understanding, inference/prediction, knowledge expression, operation control, etc.

Various fields of the artificial intelligence technology are as follows. The linguistic understanding as a technology that recognizes, and applies/processes human languages/characters include natural language processing, machine translation, a conversation system, a query response, voice recognition/synthesis, and the like. The visual understanding as a technology that recognizes and processes an object like a human vision includes object recognition, object tracking, image retrieval, person awareness, scene understanding, space understanding, image improvement, and the like. Inference prediction as a technology that judges, and logically infer and predicts information includes knowledge/probability-based inference, optimization prediction, preference-based plan, recommendation, and the like. The knowledge expression as a technology that automatically processes human experience information to knowledge data includes knowledge construction (data generation/classification), knowledge management (data utilization), and the like. The operation control as a technology that controls autonomous driving of a vehicle and a motion of a robot includes motion control (navigation, collision, and driving), manipulation control (behavior control), and the like.

In order to perform the machine learning in various fields, there is a demand for enhancing learning efficiency and speed for an artificial neural network in the art.

Korean Patent Unexamined Publication No. 2020-0021408 discloses a neural network learning method.

### SUMMARY OF THE INVENTION

The present disclosure is contrived to correspond to the above-described background art, and has been made in an effort to provide a method for learning a model.

An exemplary embodiment of the present disclosure provides a method for model learning including: computing an input image using a neural network model; computing an accuracy of a prediction box by comparing the prediction box output from the neural network model and a ground truth box; and training the neural network model by performing backpropagation on the neural network model based on the accuracy.

In an alternative exemplary embodiment of the operations of allowing the following operations for providing the model learning method, the computing an accuracy of a prediction box by comparing the prediction box output from the neural network model and a ground truth box may include computing the accuracy of the prediction box based on a sum area and an intersection area of the prediction box and the ground truth box.

In an alternative exemplary embodiment of the operations of allowing the following operations for providing the model learning method, the computing an accuracy of a prediction box by comparing the prediction box output from the neural network model and a ground truth box may include determining an intersection point of the prediction box and the ground truth box as a first reference point; determining a vertex of the prediction box as a second reference point by comparing the vertex with an edge of the ground truth box, when the vertex is located inside the ground truth box; and computing the accuracy of the prediction box based on the first reference point and the second reference point.

In an alternative exemplary embodiment of the operations of allowing the following operations for providing the model learning method, the computing the accuracy of the prediction box based on the first reference point and the second reference point may include computing an intersection area of the prediction box and the ground truth box, based on the first reference point and the second reference point.

In an alternative exemplary embodiment of the operations of allowing the following operations for providing the model learning method, the computing an accuracy of a prediction box by comparing the prediction box output from the neural network model and a ground truth box may include computing the accuracy by the number of times corresponding to the number of ground truth boxes, when two or more prediction boxes exist.

In an alternative exemplary embodiment of the operations of allowing the following operations for providing the model learning method, the computing an accuracy of a prediction box by comparing the prediction box output from the neural network model and a ground truth box may include computing the accuracy of two or more prediction boxes by comparing the two or more prediction boxes output from the neural model network and two or more ground truth boxes respectively.

In an alternative exemplary embodiment of the operations of allowing the following operations for providing the model learning method, the computing an accuracy of a prediction box by comparing the prediction box output from the neural network model and a ground truth box may include determining a prediction box corresponding to each of two or more ground truth boxes respectively, based on the ground truth box.

In an alternative exemplary embodiment of the operations of allowing the following operations for providing the model learning method, the determining a prediction box corresponding to each of two or more ground truth boxes respectively, based on the ground truth box may include: determining a grid including each of the two or more ground truth boxes; matching one prediction box and one ground truth box respectively based on the grid; and computing the accuracy of the matched prediction box and the ground truth box.

In an alternative exemplary embodiment of the operations of allowing the following operations for providing the model learning method, the computing an accuracy of two or more prediction boxes by comparing two or more prediction boxes output from the neural model network and two or more ground truth boxes respectively may include extracting one accuracy value which becomes a basis of the backpropagation, based on the accuracy of two or more prediction boxes.

Another exemplary embodiment of the present disclosure provides a computer program stored in a computer-readable medium in which when the computer program is executed in one or more processors, the computer program performs the following operations for model training, and the operations may include: computing an input image using a neural network model; computing an accuracy of a prediction box by comparing the prediction box output from the neural network model and a ground truth box; and training the neural network model by performing backpropagation on the neural network model based on the accuracy.

Still another exemplary embodiment of the present disclosure provides a server including: a processor with one or more cores; a network unit; and a memory; in which the processor is configured to: compute an input image using a neural network model; compute an accuracy of a prediction box by comparing the prediction box and a ground truth box from the neural network model; and train the neural network model by performing backpropagation on the neural network model based on the computed accuracy.

Yet another exemplary embodiment of the present disclosure provides a computer-readable medium storing a data structure corresponding to a parameter of a neural network in which at least at part is updated in a learning process, in which operations of the neural network are at least partially based on the parameter, and the operations of the neural network may include: computing an input image using a neural network model; computing an accuracy of a prediction box by comparing the prediction box output from the neural network model and a ground truth box; and training the neural network model by performing backpropagation on the neural network model based on the accuracy.

According to an exemplary embodiment of the present disclosure, a method for learning a model can be provided.

### BRIEF DESCRIPTION OF THE DRAWINGS

FIG. 1 is a block diagram of a computing device for performing operations for performing model learning according to an exemplary embodiment of the present disclosure.
FIG. 2 is a diagram exemplarily illustrating a computation method for performing model learning according to an exemplary embodiment of the present disclosure.
FIG. 3 is a diagram exemplarily illustrating a computation method for performing model learning according to an exemplary embodiment of the present disclosure.
FIG. 4 is a diagram exemplarily illustrating a flowchart for a method for learning a model according to an exemplary embodiment of the present disclosure.
FIG. 5 is a block diagram of a computing device according to an exemplary embodiment of the present disclosure.

### DETAILED DESCRIPTION

Various exemplary embodiments will now be described with reference to drawings. In the present specification, various descriptions are presented to provide an appreciation of the present disclosure. However, it is apparent that the exemplary embodiments can be executed without the specific description.

"Component", "module", "system", and the like which are terms used in the specification refer to a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside within the processor and/or a thread of execution. One component may be localized in one computer. One component may be distributed between two or more computers. Further, the components may be executed by various computer-readable media having various data structures, which are stored therein. The components may perform communication through local and/or remote processing according to a signal (for example, data transmitted from another system through a network such as the Internet through data and/or a signal from one component that interacts with other components in a local system and a distribution system) having one or more data packets, for example.

The term "or" is intended to mean not exclusive "or" but inclusive "or". That is, when not separately specified or not clear in terms of a context, a sentence "X uses A or B" is intended to mean one of the natural inclusive substitutions. That is, the sentence "X uses A or B" may be applied to any of the cases where X uses A, the case where X uses B or the case where X uses both A and B. Further, it should be understood that the term "and/or" used in this specification designates and includes all available combinations of one or more items among enumerated related items.

It should be appreciated that the term "comprise" and/or "comprising" means the presence of corresponding features and/or components. However, it should be appreciated that the term "comprises" and/or "comprising" means that the presence or addition of one or more other features, components, and/or a group thereof is not excluded. Further, when not separately specified or it is not clear in terms of the context that a singular form is indicated, it should be construed that the singular form generally means "one or more" in this specification and the claims.

Those skilled in the art need to additionally recognize that various illustrative logical blocks, configurations, modules, circuits, means, logic, and algorithm steps described in connection with the exemplary embodiments disclosed herein may be implemented as electronic hardware, computer software, or combinations of both sides. To clearly illustrate the interchangeability of hardware and software, various illustrative components, blocks, constituents, means, logic, modules, circuits, and steps have been described above generally in terms of their functionalities. Whether the functionalities are implemented as the hardware or software depends on a specific application and design restrictions given to an entire system. Skilled artisans may implement the described functionalities in various ways for each particular application. However, such implementation decisions should not be interpreted as causing a departure from the scope of the present disclosure.

The description of the presented exemplary embodiments is provided so that those skilled in the art of the present disclosure use or implement the present disclosure. Various modifications to the exemplary embodiments will be apparent to those skilled in the art. Generic principles defined herein may be applied to other embodiments without departing from the scope of the present disclosure. Therefore, the present disclosure is not limited to the exemplary embodiments presented herein. The present disclosure should be analyzed within the widest range which is coherent with the principles and new features presented herein.

In an exemplary embodiment of the present disclosure, a server may include other components for performing a server environment of the server. The server may include all arbitrary types of devices. The server as a digital device may be a digital device with a calculation capability, which has a processor installed therein and a memory, such as a laptop computer, a notebook computer, a desktop computer, a web pad, or a mobile phone. The server may be a web server that processes a service. The type of server described above is just an example and the present disclosure is not limited thereto.

In the present specification, a neural network, an artificial neural network, and a network function may often be used interchangeably with each other.

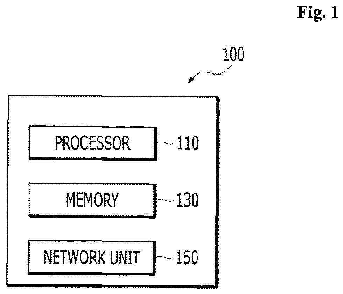

FIG. 1 is a block diagram of a computing device for operating for providing a method for learning a model according to an exemplary embodiment of the present disclosure.

An image may include one or more objects. A processor 120 may detect one or more objects included in the image by using a neural network model. The processor 120 may have to utilize a pre-trained neural network model for detecting one or more objects.

The pre-trained network model according to the present disclosure may be learned in at least one scheme of supervised learning, unsupervised learning, and semi-supervised learning. Learning of a network function is to minimize an error of an output. In the learning of the network function, learning data is repeatedly input into the network function. In the learning of the network function, an output of the network function for the learning data, and an error of a target are calculated. In a direction to reduce the error in the learning of the network function, the error of the network function is backpropagated in a direction of an input layer from an output layer of the network function to update the weight of each node of the network function.

The processor 120 inputs labeled learning data into the network function and compare a classification which is an output of the network function and a label of the learning data to calculate an error. The calculated error may be backpropagated in the direction of the input layer from the output layer which is a reverse direction in the network function. A connection weight of each node of each layer may be updated according to a backpropagation wave backpropagated in the direction of the input layer from the output layer. A variable amount of the updated connection weight of each node may be determined according to a learning rate. Calculation of the network function for the input data, and the backpropagation of the error may constitute a learning cycle. A learning rate may be applied differently according to the number of repetition times of the learning cycle of the network function. For example, in an initial stage of the learning of the network function, the network function ensures a certain level of performance quickly by using a high learning rate, thereby increasing efficiency. For example, in the latter stage of the learning of the network function, accuracy may be increased by using a low learning rate. The image segmentation may include, for example, image processing of separating a part of the image to be distinguished from the other part based on a pixel, an edge, a color, etc., extracted from the image. The classification which is the output of the network function may be pixel by pixel image segmentation. A scoring value is acquired in units of the pixel of the image, and image segmentation is performed based on each pixel scoring value to classify image data. The image segmentation may mean image processing of separating a part of the image to be distinguished from the other part.

When the object included in the image is a rotated object other than a forward object, learning performance for the rotated object may deteriorate. The processor 120 may perform learning for a neural network model by considering even a rotational angle of the object. In the method for learning a model according to the exemplary embodiment, when the rotated object is learned, even the rotational angle of the object may be considered in addition to the location of the object. That is, information on the rotational angle is also backpropagated to train the neural network model.

The method for learning a model according to the exemplary embodiment may enhance the learning performance and speed for the rotated object. The method for learning a model according to the exemplary embodiment may enhance accuracy for the neural network model by solving learning ambiguity for an angle. Further, as compared with the conventional angle learning method, the learning for the angle may be stably performed.

The processor 120 may compute an input image by using the neural network model. The input image may be an image including one or more objects. The object included in the input image may be an object which is at least partially rotated other than the forward object. For example, a person object included in the input image may be the object which is at least partially rotated other than a person which stands at an angle of 180 degrees. A detailed description of the object is just an example and the present disclosure is not limited thereto.

The neural network model may be a deep neural network. Throughout the present specification, a neural network, a network function, and a neural network may be used as the same meaning. A deep neural network (DNN) may refer to a neural network that includes a plurality of hidden layers in addition to the input and output layers. When the deep neural network is used, the latent structures of data may be determined. That is, latent structures of photos, text, video, voice, and music (e.g., what objects are in the photo, what the content and feelings of the text are, what the content and feelings of the voice are) may be determined. The deep neural network may include a convolutional neural network (CNN), a recurrent neural network (RNN), a restricted Boltzmann machine (RBM), a deep belief network (DBN), a Q network, a U network, a Siam network, and the like.

The convolutional neural network as a kind of deep neural network includes a neural network including a convolutional layer. The convolutional neural network is a type of multilayer perceptron designed to use minimal preprocessing. The CNN may be constituted by one or multiple convolutional layers and artificial neural network layers combined therewith. The CNN may additionally utilize a weight and pooling layers. Such a structure allows the CNN to fully utilize the input data of a two-dimensional structure. The convolutional neural network may be used for recognizing an object in an image. The convolutional neural network may represent and process image data as a matrix having the dimension. For example, in the case of image data encoded in red-green-blue (RGB), the image data may be represented as a two-dimensional (for example, a two-dimensional image) matrix for each of R, G, and B colors. That is, a color value of each pixel of the image data may become a component of the matrix and the size of the matrix may be equal to the size of the image. Accordingly, the image data may be represented by three two-dimensional matrices (three-dimensional data array).

In the convolutional neural network, matrix components at the respective locations of a convolutional filter and the image are multiplied by each other while moving the convolutional filter to perform a convolutional process (input/output of a convolutional layer). The convolutional filter may be configured in a matrix in the form of n * n. The convolutional filter may be generally configured by a filter of a fixed form smaller than the total number of pixels of the image. In other words, when m * m images are input to the convolutional layer (e.g., a convolutional layer in which the size of the convolutional filter is n * n), a matrix representing n * n pixels including each pixel of the image may be a component multiplication with the convolutional filter (i.e., multiplication of respective components of the matrix). Components matched with the convolutional filter may be extracted from the image by the multiplication with the convolutional filter. For example, a 3 * 3 convolutional filter for extracting a vertical straight-line component from the image may be constituted by [[0,1,0], [0,1,0], [0,1,0]]. When the 3 * 3 convolutional filter for extracting the vertical straight-line component from the image is applied to an input image, vertical straight-line components which match the convolutional filter may be extracted and outputted from the image. The convolutional layer may apply the convolutional filter to respective matrixes (i.e., R, G, and B colors in the case of R, G, and B coding images) for respective channels representing the image. The convolutional layer may extract features matched with the convolutional filter from the input image by applying the convolutional filter to the input image. A filter value (i.e., a value of each component of the matrix) of the convolutional filter may be updated by backpropagation during a learning process of the convolutional neural network.

A subsampling layer is connected to the output of the convolutional layer to simplify the output of the convolutional layer, thereby reducing a memory usage amount and a computational amount. For example, when the output of the convolutional layer is input to a pooling layer having a 2 * 2 max-pooling filter, a maximum value included in each patch is output every 2 * 2 patches in each pixel of the image to compress the image. The aforementioned pooling may be a scheme that outputs a minimum value in the patch or outputs an average value of the patch and a predetermined pooling method may be included in the present disclosure.

The convolutional neural network may include one or more convolutional layers and subsampling layers. The convolutional neural network repeatedly performs the convolutional process and a subsampling process (e.g., the aforementioned max pooling) to extract the features from the image. The neural network may extract global features of the image through the repeated convolutional process and subsampling process.

The output of the convolutional layer or the subsampling layer may be input to a fully connected layer. The fully connected layer is a layer in which all neurons in one layer and all neurons in an adjacent layer are connected. The fully connected layer may mean a structure in which all nodes of each layer are connected to all nodes of another layer in the neural network.

In an exemplary embodiment of the present disclosure, the neural network may include a deconvolutional neural network (DCNN) in order to perform the segmentation of medical data included in a medical image. The deconvolutional neural network performs a similar operation as calculating the convolutional neural network in a reverse direction. The deconvolutional neural network may output the features extracted from the convolutional neural network to a feature map related to original data. A description of a detailed configuration for the convolutional neural network is discussed in more detail in US Patent Registration US9870768B2, the entire contents of which are incorporated herein by reference in this application.

The processor 120 compares a prediction box and a ground truth box output from the neural network model to compute the accuracy of the prediction box.

The learning data may include a learning image and a labeling result for an object included in the learning image. The labeling result for the learning image may be the ground truth box. The ground truth box may be a box indicating a real location of the object included in the image. The ground truth box may be, i.e., a labeling result for the object included in the image. The ground truth box may mean a result of displaying the real location of the object included in the learning image with respect to the learning image which is the learning data.

The prediction box may be a result output by computing the input image by using the neural network model. The processor 120 computes the input image by using the neural network model and predicts the location of the object included in the input image to output the prediction box for the object.

The processor 120 may train the neural network model by using a difference between the ground truth box which is a real correct answer and the prediction box which is a computation result using the neural network model. The processor 120 may allow the neural network model to learn a difference between the output of the neural network model and the real correct answer.

The processor 120 may compute the accuracy of the prediction box based on areas of a sum area and an intersection area of the prediction box and the ground truth box. The processor 120 may compute a sum area which is a value acquired by subtracting the area of the intersection area from a sum of the prediction box and the ground truth box. The processor 120 may compute the area for the intersection area between the prediction box and the ground truth box. The processor 120 may compute the accuracy of the prediction box by dividing the area of the sum area by the area of the intersection area. That is, the processor 120 may output the accuracy of the prediction box by computing (area of intersection area) / (area of sum area) which is an intersection over union (IOU) value. The processor 120 may perform learning for the neural network model by backpropagating an accuracy value of the prediction box.

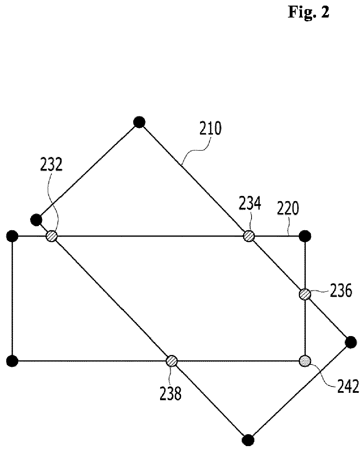

Hereinafter, a method for computing the accuracy value of the prediction box by the processor 120 will be described in detail. Hereinafter, the method will be described with reference to FIG. 2. FIG. 2 is a diagram exemplarily illustrating a prediction box 220 and a ground truth box 210.

The processor 120 may determine an intersection point of the prediction box 220 and the ground truth box 210 as the first reference points 232, 234, 236, and 238.

The processor 120 compares a vertex of the prediction box 220 and an edge of the ground truth box 210 and when the vertex is located inside the ground truth box 210, the processor 120 may determine the vertex as a second reference point 242.

The processor 120 may compute the accuracy of the prediction box 220 based on the first reference points 232, 234, 236, and 238 and the second reference point 242.

The processor 120 may compute an area the intersection area of the prediction box 220 and the ground truth box 210 based on the first reference points 232, 234, 236, and 238 and the second reference point 242.

The processor 120 may compute areas for regions linked by lines connecting the first reference points 232, 234, 236, and 238 and the second reference point 242. The processor 120 may accurately derive a computation result of boxes for rotated objects by computing the area for the intersection area by using the first reference point and the second reference point.

Even when the processor 120 learns the rotated objects, the processor 120 sets the first reference point and the second reference point to easily and rapidly perform the learning. In the case of conventional rotated object learning methods, an angular change of the rotated object is computed, and as a result, there is a disadvantage in that learning efficiency deteriorates and an excessive computation is required. When the learning method according to an exemplary embodiment of the present disclosure is used, a difference between a prediction box and a ground truth box for an object which is accurately rotated at a high speed may be computed.

When there are two or more ground truth boxes, the processor 120 may compute the accuracy at the number of times corresponding to the number of ground truth boxes. The processor 120 may perform accuracy computation at the number of times corresponding to the number of ground truth boxes. For example, when the number of ground truth boxes labeled to the learning data is 3, three accuracy computations may be performed. In the case of the conventional learning method, when the number of ground truth boxes is 3 and the number of prediction boxes is 3, 3 * 3, i.e., 9 accuracy computations are performed to learn the neural network model. In the case of the learning method of the neural network model according to an exemplary embodiment of the present disclosure, the accuracy computation is performed only at the number of times corresponding to the number of ground truth boxes to reduce an unnecessary computation amount.

The processor 120 may determine prediction boxes corresponding to two or more ground truth boxes, respectively one by one based on the ground truth box. The processor 120 may determine one of each of a ground truth box and a prediction box which is to perform accuracy computation with the ground truth box, which corresponds to the ground truth box, respectively, in order to perform the accuracy computation at the number of times corresponding to the number of ground truth boxes. That is, accuracy computation with a first prediction box may be performed for a first ground truth box, and the accuracy computation may not be performed between the first ground truth box and a second prediction box, and between the first ground truth box and a third prediction box.

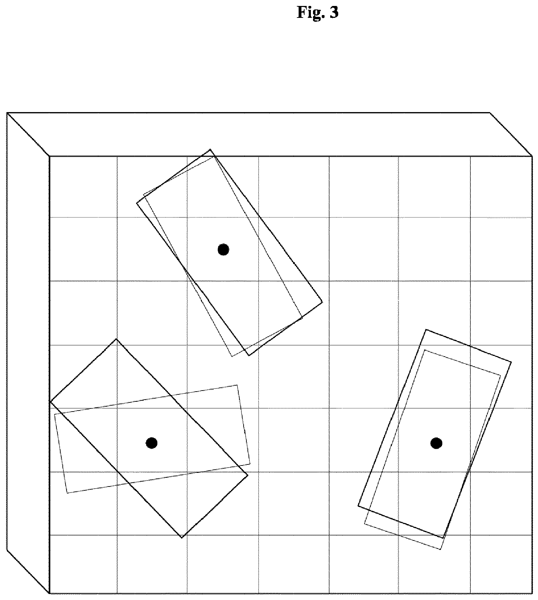

Referring to FIG. 3, the accuracy computation will be described. FIG. 3 is a diagram exemplarily illustrating prediction boxes and ground truth boxes. In FIG. 3, three prediction boxes and three ground truth boxes are illustrated.

The processor 120 may determine a grid including each of the two or more ground truth boxes. The processor 120 may determine one grid including a center point of the ground truth box. A black point of each box center is illustrated in FIG. 3 may be the center point of the ground truth box. The center point is illustrated in FIG. 3 is a point exemplarily illustrated in order to describe the learning method, and in an actual learning process, such a point may not be displayed.

The processor 120 may match one prediction box and one ground truth box with each other based on the grid. The processor 120 may determine, based on a grid determined for the ground truth box, one prediction box predicted for the corresponding grid. The processor 120 determines one grid based on the center point of the ground truth box, and determines one prediction box for the determined grid to perform accuracy computation between the corresponding ground truth box and the corresponding prediction box. The processor 120 may compute the accuracy for the matched prediction box and ground truth box. The accuracy computation for the matched prediction box and ground truth box may be the IOU computation as described above.

The processor 120 may not perform accuracy computation between other prediction boxes located outside the corresponding grid and the ground truth box corresponding to the corresponding grid.

FIG. 3 illustrates each of three ground truth boxes and three prediction boxes. In the conventional learning methods, since the number of ground truth boxes is 3 and the number of prediction boxes is 3, there is a disadvantage in that 9 accuracy computations should be performed. When 9 accuracy computations are performed, a consumption amount of computing power significantly may increase and the accuracy may also deteriorate.

In the case of the model learning method according to an exemplary embodiment of the present disclosure, since there are three ground truth boxes, grids corresponding to three ground truth boxes, respectively are determined and one prediction box corresponding to the corresponding grid is determined to perform accuracy computation between each of three ground truth boxes and one prediction box corresponding thereto. That is, according to the learning method of the neural network model according to an exemplary embodiment of the present disclosure, since three accuracy computations have to be performed, the consumption amount of the computing power significantly decreases, and as a result, the computation efficiency may be achieved and since computation between unnecessary boxes need not be performed, the accuracy of the computation may also be achieved.

The processor 120 compares two or more prediction boxes and two or more ground truth boxes output from the neural network model, respectively to compute the accuracy of the two or more prediction boxes. For example, in the case of FIG. 3, the processor 120 may compute the accuracy for each of the three boxes.

The processor 120 may extract one accuracy value which becomes a basis of the backpropagation based on the accuracies of the two or more prediction boxes. The processor 120 may extract one accuracy value by using a sum computation for accuracies of two or more prediction boxes. For example, in the case of FIG. 3, the processor 120 may compute each of a first accuracy value for the first ground truth box, a second accuracy value for the second ground truth box, and a third accuracy value for the third ground truth box. The processor 120 may extract one accuracy value by using an average value for the first to third accuracy values. The processor 120 may extract one accuracy value by various methods in addition to the average value. A detailed description of the accuracy value extraction is just an example and the present disclosure is not limited thereto.

The processor 120 may train the neural network model by performing the backpropagation for the neural network model based on the accuracy. The processor 120 may train the neural network model by using the accuracy value. In the case of the supervised learning, an error which is a difference value between a label which is a correct answer included in the learning data and an output value of the neural network model is backpropagated to allow the neural network model to minimize such an error.

A computing device 100 for providing the model learning method according to an exemplary embodiment of the present disclosure may include a network unit 110, a processor 120, and a memory 130.

The network unit 110 may transmit and receive an image according to an exemplary embodiment of the present disclosure to and from other computing devices, servers, and the like. In addition, the network unit 110 may enable communication among a plurality of computing devices so that operations for the learning of the model are distributedly performed in each of the plurality of computing devices. The network unit 110 enables communication among a plurality of computing devices so that computation for model learning using the network function is distributedly performed in each of the plurality of computing devices.

The network unit 110 according to an exemplary embodiment of the present disclosure may operate based on arbitrary type wired/wireless communication technology which is currently used and implemented, such as local area (short range), long range, wired, and wireless, and may be used even in other networks.

The processor 120 may be constituted by one or more cores and may include processors for learning a model, which include a central processing unit (CPU), a general purpose graphics processing unit (GPGPU), a tensor processing unit (TPU), and the like of the computing device. The processor 120 may read a computer program stored in the memory 130 to provide an object detecting method according to an exemplary embodiment of the present disclosure. According to an exemplary embodiment of the present disclosure, the processor 120 may perform a calculation for providing the object detecting method.

The memory 130 may store a computer program for providing the model learning method according to an exemplary embodiment of the present disclosure and the stored computer program may be read and driven by the processor 120.

The memory 130 according to the exemplary embodiments of the present disclosure may store a program for an operation of the processor 120 and temporarily or permanently store input/output data or events. The memory 130 may store data regarding the display and the sound. The memory 130 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

Disclosed is a computer-readable medium storing the data structure according to an exemplary embodiment of the present disclosure.

The data structure may refer to the organization, management, and storage of data that enables efficient access to and modification of data. The data structure may refer to the organization of data for solving a specific problem (e.g., data search, data storage, data modification in the shortest time). The data structures may be defined as physical or logical relationships between data elements, designed to support specific data processing functions. The logical relationship between data elements may include a connection relationship between data elements that the user defines. The physical relationship between data elements may include an actual relationship between data elements physically stored on a computer-readable storage medium (e.g., persistent storage device). The data structure may specifically include a set of data, a relationship between the data, a function that may be applied to the data, or instructions. Through an effectively designed data structure, a computing device can perform operations while using the resources of the computing device to a minimum. Specifically, the computing device can increase the efficiency of operation, read, insert, delete, compare, exchange, and search through the effectively designed data structure.

The data structure may be divided into a linear data structure and a non-linear data structure according to the type of data structure. The linear data structure may be a structure in which only one data is connected after one data. The linear data structure may include a list, a stack, a queue, and a deque. The list may mean a series of data sets in which an order exists internally. The list may include a linked list. The linked list may be a data structure in which data is connected in a scheme in which each data is linked in a row with a pointer. In the linked list, the pointer may include link information with next or previous data. The linked list may be represented as a single linked list, a double linked list, or a circular linked list depending on the type. The stack may be a data listing structure with limited access to data. The stack may be a linear data structure that may process (e.g., insert or delete) data at only one end of the data structure. The data stored in the stack may be a data structure (LIFO-Last in First Out) in which the data is input last and output first. The queue is a data listing structure that may access data limitedly and unlike a stack, the queue may be a data structure (FIFO-First in First Out) in which late stored data is output late. The deque may be a data structure capable of processing data at both ends of the data structure.

The non-linear data structure may be a structure in which a plurality of data is connected after one data. The non-linear data structure may include a graph data structure. The graph data structure may be defined as a vertex and an edge, and the edge may include a line connecting two different vertices. The graph data structure may include a tree data structure. The tree data structure may be a data structure in which there is one path connecting two different vertices among a plurality of vertices included in the tree. That is, the tree data structure may be a data structure that does not form a loop in the graph data structure.

Throughout the present specification, a computation model, the neural network, a network function, and the neural network may be used as the same meaning. Hereinafter, the computation model, the neural network, the network function, and the neural network will be integrated and described as the neural network. The data structure may include the neural network. In addition, the data structures, including the neural network, may be stored in a computer-readable medium. The data structure including the neural network may also include data preprocessed for processing by the neural network, data input to the neural network, weights of the neural network, hyper parameters of the neural network, data obtained from the neural network, an active function associated with each node or layer of the neural network, and a loss function for learning the neural network. The data structure including the neural network may include predetermined components of the components disclosed above. In other words, the data structure including the neural network may include all of the data preprocessed for processing by the neural network, data input to the neural network, weights of the neural network, hyper parameters of the neural network, data obtained from the neural network, an active function associated with each node or layer of the neural network, and a loss function for learning the neural network or a combination thereof. In addition to the above-described configurations, the data structure including the neural network may include predetermined other information that determines the characteristics of the neural network. In addition, the data structure may include all types of data used or generated in the calculation process of the neural network, and is not limited to the above. The computer-readable medium may include a computer-readable recording medium and/or a computer-readable transmission medium. The neural network may be generally constituted by an aggregate of calculation units that are mutually connected to each other, which may be called nodes. The nodes may also be called neurons. The neural network is configured to include one or more nodes.

The data structure may include data input into the neural network. The data structure including the data input into the neural network may be stored in the computer-readable medium. The data input to the neural network may include learning data input in a neural network learning process and/or input data input to a neural network in which learning is completed. The data input to the neural network may include preprocessed data and/or data to be preprocessed. The preprocessing may include a data processing process for inputting data into the neural network. Therefore, the data structure may include data to be preprocessed and data generated by preprocessing. The data structure is just an example and the present disclosure is not limited thereto.

The data structure may include weights of the neural network (weights and parameters may be used as the same meaning in the present disclosure). In addition, the data structures, including the weight of the neural network, may be stored in the computer-readable medium. The neural network may include a plurality of weights. The weight may be variable and the weight is variable by a user or an algorithm in order for the neural network to perform a desired function. For example, when one or more input nodes are mutually connected to one output node by the respective links, the output node may determine a data value output from an output node based on values input in the input nodes connected with the output node and the weights set in the links corresponding to the respective input nodes. The data structure is just an example and the present disclosure is not limited thereto.

As a non-limiting example, the weight may include a weight that varies in the neural network learning process and/or a weight in which neural network learning is completed. The weight which varies in the neural network learning process may include a weight at a time when a learning cycle starts and/or a weight that varies during the learning cycle. The weight in which the neural network learning is completed may include a weight in which the learning cycle is completed. Accordingly, the data structure including the weight of the neural network may include a data structure including the weight which varies in the neural network learning process and/or the weight in which neural network learning is completed. Accordingly, the above-described weight and/or a combination of each weight are included in a data structure including a weight of a neural network. The data structure is just an example and the present disclosure is not limited thereto.

The data structure including the weight of the neural network may be stored in the computer-readable storage medium (e.g., memory, hard disk) after a serialization process. Serialization may be a process of storing data structures on the same or different computing devices and later reconfiguring the data structure and converting the data structure to a form that may be used. The computing device may serialize the data structure to send and receive data over the network. The data structure including the weight of the serialized neural network may be reconfigured in the same computing device or another computing device through deserialization. The data structure including the weight of the neural network is not limited to the serialization. Furthermore, the data structure including the weight of the neural network may include a data structure (for example, B-Tree, Trie, m-way search tree, AVL tree, and Red-Black Tree in a nonlinear data structure) to increase the efficiency of operation while using resources of the computing device to a minimum. The above-described matter is just an example and the present disclosure is not limited thereto.

The data structure may include hyper-parameters of the neural network. In addition, the data structures, including the hyper-parameters of the neural network, may be stored in the computer-readable medium. The hyper-parameter may be a variable that may be varied by the user. The hyper-parameter may include, for example, a learning rate, a cost function, the number of learning cycle iterations, weight initialization (for example, setting a range of weight values to be subjected to weight initialization), and Hidden Unit number (e.g., the number of hidden layers and the number of nodes in the hidden layer). The data structure is just an example and the present disclosure is not limited thereto.

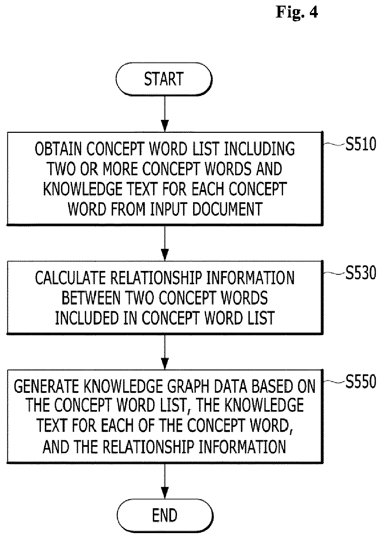

FIG. 4 is a flowchart for performing a method for learning a model according to an exemplary embodiment of the present disclosure.

The computing device 100 may compute an input image by using the neural network model (410).

The computing device 100 compares a prediction box and a ground truth box output from the neural network model to compute the accuracy of the prediction box (420). The computing device 100 may compute the accuracy of the prediction box based on areas of a sum area and an intersection area of the prediction box and the ground truth box.

The computing device 100 may determine an interaction point of the prediction box and the ground truth box as a first reference point. The computing device 100 compares a vertex of the prediction box and an edge of the ground truth box and when the vertex is located inside the ground truth box, the computing device 100 may determine the vertex as a second reference point. The computing device 100 may compute the accuracy of the prediction box based on the first reference point and the second reference point. The computing device 100 may compute an area of an interaction region of the prediction box and the ground truth box based on the first reference point and the second reference point.

When there are two or more ground truth boxes, the computing device 100 may compute the accuracy at the number of times corresponding to the number of ground truth boxes. The computing device 100 performs the backpropagation for the neural network model based on the accuracies of two or more prediction boxes output from the neural network model and compares two or more prediction boxes and two or more ground truth boxes, respectively to compute the accuracies of the two or more prediction boxes.

The computing device 100 may determine prediction boxes corresponding to two or more ground truth boxes, respectively one by one based on the ground truth box. The computing device 100 may determine a grid including each of the two or more ground truth boxes. The computing device 100 may match one prediction box and one ground truth box with each other based on the grid. The computing device 100 may compute the accuracy for the matched prediction box and ground truth box.

The computing device 100 may extract one accuracy value which becomes a basis of the backpropagation based on the accuracies of the two or more prediction boxes.

The computing device 100 may train the network model (430).

The model learning method according to an exemplary embodiment of the present disclosure may be implemented by a module, a circuit, a means, and a logic that performs the operation.

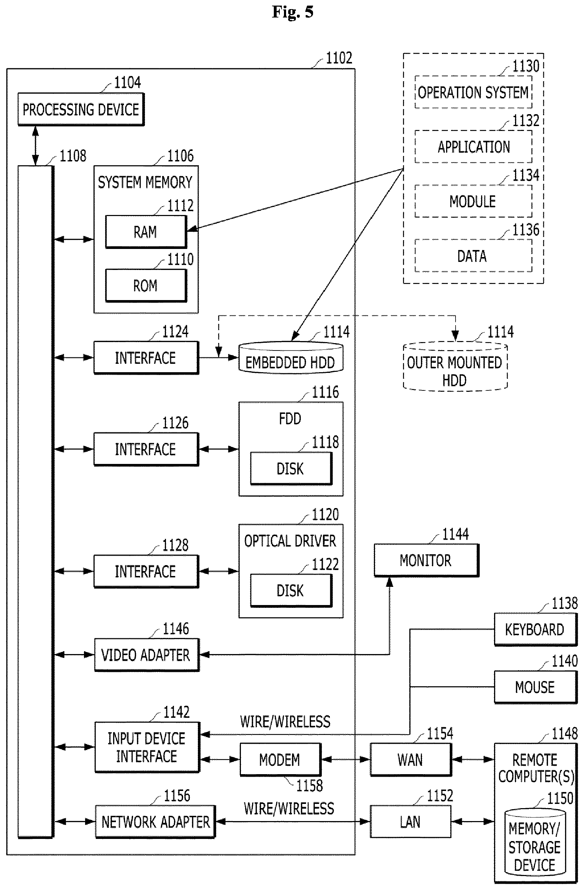

FIG. 5 is a block diagram of a computing device according to an exemplary embodiment of the present disclosure.

FIG. 5 illustrates a simple and generally schematic view of an exemplary computing environment in which the exemplary embodiments of the present disclosure may be implemented.

The present disclosure has generally been described above in association with a computer-executable instruction which may be executed on one or more computers, but it will be well appreciated by those skilled in the art that the present disclosure can be implemented through a combination with other program modules and/or a combination of hardware and software.

In general, the program module includes a routine, a program, a component, a data structure, and the like that execute a specific task or implement a specific abstract data type. Further, it will be well appreciated by those skilled in the art that the method of the present disclosure can be implemented by other computer system configurations including a personal computer, a handheld computing device, microprocessor-based or programmable home appliances, and others (the respective devices may operate in connection with one or more associated devices as well as a single-processor or multi-processor computer system, a mini-computer, and the main frame computer.

The exemplary embodiments described in the present disclosure may also be implemented in a distributed computing environment in which predetermined tasks are performed by remote processing devices connected through a communication network. In the distributed computing environment, the program module may be positioned in both local and remote memory storage devices.

The computer generally includes various computer-readable media. Media accessible by the computer may be computer-readable media regardless of types thereof. The computer-readable media include volatile and non-volatile media, transitory and non-transitory media, and mobile and non-mobile media. As a non-limiting example, the computer-readable media may include both computer-readable storage media and computer-readable transmission media. The computer-readable storage media include volatile and non-volatile media, transitory and non-transitory media, and mobile and non-mobile media implemented by a predetermined method or technology for storing information such as a computer-readable instruction, a data structure, a program module, or other data. The computer storage media include a RAM, a ROM, an EEPROM, a flash memory or other memory technologies, a CD-ROM, a digital video disk (DVD) or other optical disk storage devices, a magnetic cassette, a magnetic tape, a magnetic disk storage device or other magnetic storage devices or predetermined other media which may be accessed by the computer or may be used to store desired information, but are not limited thereto.

The computer-readable transmission media generally implement the computer-readable command, the data structure, the program module, or other data in a modulated data signal such as other transport mechanisms and include all information transfer media. The term "modulated data signal" means a signal acquired by setting or changing at least one of characteristics of the signal so as to encode information in the signal. As a non-limiting example, the computer-readable transmission media include wired media such as a wired network or a direct-wired connection and wireless media such as acoustic, RF, infrared, and other wireless media. A combination of any media among the aforementioned media is also included in a range of the computer-readable transmission media.

An exemplary environment 1100 that implements various aspects of the present disclosure including a computer 1102 is shown and the computer 1102 includes a processing device 1104, a system memory 1106, and a system bus 1108. The system bus 1108 connects system components including the system memory 1106 (not limited thereto) to the processing device 1104. The processing device 1104 may be a predetermined processor among various commercial processors. A dual processor and other multi-processor architectures may also be used as the processing device 1104.

The system bus 1108 may be any one of several types of bus structures that may be additionally interconnected to a local bus using any one of a memory bus, a peripheral device bus, and various commercial bus architectures. The system memory 1106 includes a read-only memory (ROM) 1110 and random access memory (RAM) 1112. A basic input/output system (BIOS) is stored in the non-volatile memories 1110 including the ROM, the EPROM, the EEPROM, and the like and the BIOS includes a basic routine that assists in transmitting information among components in the computer 1102 at a time such as in starting. The RAM 1112 may also include high-speed RAM including static RAM for caching data, and the like.

The computer 1102 also includes an internal hard disk drive (HDD) 1114 (for example, EIDE and SATA) - the internal hard disk drive (HDD) 1114 may also be configured for an external purpose in an appropriate chassis (not illustrated)-, a magnetic floppy disk drive (FDD) 1116 (for example, for reading from or writing in a mobile diskette 1118), and an optical disk drive 1120 (for example, for reading a CD-ROM disk 1122 or reading from or writing in other high-capacity optical media such as the DVD). The hard disk drive 1114, the magnetic disk drive 1116, and the optical disk drive 1120 may be connected to the system bus 1108 by a hard disk drive interface 1124, a magnetic disk drive interface 1126, and an optical disk drive interface 1128, respectively. An interface 1124 for implementing an exterior drive includes at least one of a universal serial bus (USB) and an IEEE 1394 interface technology or both of them.

The drives and the computer-readable media associated therewith provide non-volatile storage of the data, the data structure, the computer-executable instruction, and others. In the case of the computer 1102, the drives and the media correspond to storing of predetermined data in an appropriate digital format. In the description of the computer-readable media, the mobile optical media such as the HDD, the mobile magnetic disk, and the CD or the DVD are mentioned, but it will be well appreciated by those skilled in the art that other types of media readable by the computer such as a zip drive, a magnetic cassette, a flash memory card, a cartridge, and others may also be used in an exemplary operating environment and further, the predetermined media may include computer-executable commands for executing the methods of the present disclosure.

Multiple program modules including an operating system 1130, one or more application programs 1132, other program modules 1134, and program data 1136 may be stored in the drive and the RAM 1112. All or some of the operating system, the application, the module, and/or the data may also be cached in the RAM 1112. It will be well appreciated that the present disclosure may be implemented in operating systems which are commercially usable or a combination of the operating systems.

A user may input instructions and information in the computer 1102 through one or more wired/wireless input devices, for example, pointing devices such as a keyboard 1138 and a mouse 1140. Other input devices (not illustrated) may include a microphone, an IR remote controller, a joystick, a game pad, a stylus pen, a touch screen, and others. These and other input devices are often connected to the processing device 1104 through an input device interface 1142 connected to the system bus 1108, but may be connected by other interfaces including a parallel port, an IEEE 1394 serial port, a game port, a USB port, an IR interface, and others.

A monitor 1144 or other types of display devices are also connected to the system bus 1108 through interfaces such as a video adapter 1146, and the like. In addition to the monitor 1144, the computer generally includes other peripheral output devices (not illustrated) such as a speaker, a printer, others.

The computer 1102 may operate in a networked environment by using a logical connection to one or more remote computers including remote computer(s) 1148 through wired and/or wireless communication. The remote computer(s) 1148 may be a workstation, a computing device computer, a router, a personal computer, a portable computer, a microprocessor based entertainment apparatus, a peer device, or other general network nodes and generally includes multiple components or all of the components described with respect to the computer 1102, but only a memory storage device 1150 is illustrated for a brief description. The illustrated logical connection includes a wired/wireless connection to a local area network (LAN) 1152 and/or a larger network, for example, a wide area network (WAN) 1154. The LAN and WAN networking environments are general environments in offices and companies and facilitate an enterprise-wide computer network such as Intranet, and all of them may be connected to a worldwide computer network, for example, the Internet.

When the computer 1102 is used in the LAN networking environment, the computer 1102 is connected to a local network 1152 through a wired and/or wireless communication network interface or an adapter 1156. The adapter 1156 may facilitate the wired or wireless communication to the LAN 1152 and the LAN 1152 also includes a wireless access point installed therein in order to communicate with the wireless adapter 1156. When the computer 1102 is used in the WAN networking environment, the computer 1102 may include a modem 1158 or has other means that configure communication through the WAN 1154 such as connection to a communication computing device on the WAN 1154 or connection through the Internet. The modem 1158 which may be an internal or external and wired or wireless device is connected to the system bus 1108 through the serial port interface 1142. In the networked environment, the program modules described with respect to the computer 1102 or some thereof may be stored in the remote memory/storage device 1150. It will be well known that an illustrated network connection is exemplary and other means configuring a communication link among computers may be used.

The computer 1102 performs an operation of communicating with predetermined wireless devices or entities which are disposed and operated by the wireless communication, for example, the printer, a scanner, a desktop and/or a portable computer, a portable data assistant (PDA), a communication satellite, predetermined equipment or place associated with a wireless detectable tag, and a telephone. This at least includes wireless fidelity (Wi-Fi) and Bluetooth wireless technology. Accordingly, communication may be a predefined structure like the network in the related art or just ad hoc communication between at least two devices.

The wireless fidelity (Wi-Fi) enables connection to the Internet, and the like without a wired cable. The Wi-Fi is a wireless technology such as the device, for example, a cellular phone which enables the computer to transmit and receive data indoors or outdoors, that is, anywhere in a communication range of a base station. The Wi-Fi network uses a wireless technology called IEEE 802.11 (a, b, g, and others) in order to provide safe, reliable, and high-speed wireless connection. The Wi-Fi may be used to connect the computers to each other or the Internet and the wired network (using IEEE 802.3 or Ethernet). The Wi-Fi network may operate, for example,at a data rate of 11 Mbps (802.11a) or 54 Mbps (802.11b) in unlicensed 2.4 and 5 GHz wireless bands or operate in a product including both bands (dual bands).

It will be appreciated by those skilled in the art that information and signals may be expressed by using various different predetermined technologies and techniques. For example, data, instructions, commands, information, signals, bits, symbols, and chips which may be referred to in the above description may be expressed by voltages, currents, electromagnetic waves, magnetic fields or particles, optical fields, or particles, or predetermined combinations thereof.

It may be appreciated by those skilled in the art that various exemplary logical blocks, modules, processors, means, circuits, and algorithm steps described in association with the exemplary embodiments disclosed herein may be implemented by electronic hardware, various types of programs, or design codes (for easy description, herein, designated as "software"), or a combination of all of them. In order to clearly describe the inter compatibility of the hardware and the software, various exemplary components, blocks, modules, circuits, and steps have been generally described above in association with functions thereof. Whether the functions are implemented as the hardware or software depends on design restrictions given to a specific application and an entire system. Those skilled in the art of the present disclosure may implement functions described by various methods with respect to each specific application, but it should not be interpreted that the implementation determination departs from the scope of the present disclosure.

Various exemplary embodiments presented herein may be implemented as manufactured articles using a method, a device, or a standard programming and/or engineering technique. The term "manufactured article" includes computer programs or media which are accessible by a predetermined computer-readable device. For example, a computer-readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. Further, various storage media presented herein include one or more devices and/or other machine-readable media for storing information.

It will be appreciated that a specific order or a hierarchical structure of steps in the presented processes is one example of exemplary accesses. It will be appreciated that the specific order or the hierarchical structure of the steps in the processes within the scope of the present disclosure may be rearranged based on design priorities. Appended method claims provide elements of various steps in a sample order, but the method claims are not limited to the presented specific order or hierarchical structure.

The description of the presented exemplary embodiments is provided so that those skilled in the art of the present disclosure use or implement the present disclosure. Various modifications to the exemplary embodiments will be apparent to those skilled in the art. Generic principles defined herein may be applied to other embodiments without departing from the scope of the present disclosure. Therefore, the present disclosure is not limited to the exemplary embodiments presented herein, but should be interpreted within the widest range which is coherent with the principles and new features presented herein.

## Claims

1. A method for model learning, the method comprising:
computing an input image including at least one rotated object using a neural network model;
determining a first reference point and a second reference point by comparing a prediction box output from the neural network model and a ground truth box;
computing an accuracy of the prediction box based on the first reference point and the second reference point; and
training the neural network model by performing backpropagation on the neural network model based on the accuracy.

2. The method of claim 1, wherein the computing the accuracy of a prediction box based on the first reference point and the second reference point comprising:
computing the accuracy of the prediction box based on a sum area and an intersection area of the prediction box and the ground truth box.

3. The method of claim 1, Wherein the determining the first reference point and the second reference point comprising:
determining an intersection point of the prediction box and the ground truth box as the first reference point; and
determining a vertex of the prediction box as the second reference point by comparing the vertex with an edge of the ground truth box, when the vertex is located inside the ground truth box.

4. The method of claim 1, wherein the computing the accuracy of the prediction box comprising:
computing an intersection area of the prediction box and the ground truth box, based on the first reference point and the second reference point.

5. The method of claim 1, wherein the computing the accuracy of a prediction box based on the first reference point and the second reference point comprising:
computing the accuracy by the number of times corresponding to the number of ground truth boxes, when two or more prediction boxes exist.

6. The method of claim 1, wherein the computing the accuracy of a prediction box based on the first reference point and the second reference point comprising:
computing the accuracy of two or more prediction boxes by comparing the two or more prediction boxes output from the neural model network and two or more ground truth boxes respectively.

7. The method of claim 1, wherein the computing the accuracy of a prediction box based on the first reference point and the second reference point comprising:
determining a prediction box corresponding to each of two or more ground truth boxes one by one, based on the ground truth box.

8. The method of claim 7, Wherein the determining the prediction box corresponding to each of the two or more ground truth boxes one by one based on the ground truth box comprising:
determining a grid including each of the two or more ground truth boxes;
matching one prediction box and one ground truth box respectively based on the grid; and
computing the accuracy of the matched prediction box and the ground truth box.

9. The method of claim 6, Wherein the computing the accuracy of the two or more prediction boxes by comparing the two or more prediction boxes output from the neural model network and the two or more ground truth boxes respectively comprising:
extracting one accuracy value which becomes a basis of the backpropagation, based on the accuracy of the two or more prediction boxes.

10. A computer program stored in a computer readable medium wherein when the computer program is executed in one or more processors, the computer program performs the following operations for model training, the operations comprising:
computing an input image containing at least one rotated object using a neural network model;
determining a first reference point and a second reference point by comparing a prediction box output from the neural network model and a ground truth box;
computing an accuracy of the prediction box based on the first reference point and the second reference point; and
training the neural network model by performing backpropagation on the neural network model based on the accuracy.

11. A server, comprising:
processor with one or more cores;
a network unit; and
a memory;
wherein the processor is configured to:
compute an input image containing at least one rotated object using a neural network model;
determine a first reference point and a second reference point by comparing a prediction box output from the neural network model and a ground truth box;
compute an accuracy of the prediction box based on the first reference point and the second reference point; and
train the neural network model by performing backpropagation on the neural network model based on the accuracy.
